# EUROPEAN PATENT SPECIFICATION

(11) **EP 4 316 924 B1**
(45) Date of publication and mention of the grant of the patent: **16.10.2024**
(21) Application number: 22188944.7
(22) Date of filing: 05.08.2022
(51) Int. Cl.: B60T 7/08, F16D 65/28

(54) **BRAKE ACTUATOR, BOOT FOR BRAKE ACTUATOR AND BRAKING SYSTEM**
BREMSZYLINDER, DICHTBALG FÜR EINEN BREMSZYLINDER UND BREMSSYSTEM
ACTIONNEUR DE FREIN, SOUFFLET POUR ACTIONNEUR DE FREIN ET SYSTÈME DE FREINAGE

(43) Date of publication of application: 07.02.2024
(73) Proprietor: ZF CV Systems Europe BV, 1170 Brüssel (BE)
(72) Inventor: FLISEK, Filip, 51-180 Wroclaw (PL); LOZA, Lukasz, 54-210 Wroclaw (PL); TALKO, Waldemar, 54-614 Wroclaw (PL)
(74) Representative: Ohlendorf, Henrike

(56) References cited:
- EP-A1- 0 692 651
- WO-A1-97/41021

## Description

The present invention is directed to a brake actuator. The invention is further directed to a boot for use in a brake actuator, to the use of a boot in a brake actuator and to a braking system comprising a brake actuator.

The purpose of brake actuators in commercial vehicles such as trucks and buses is to produce a braking force at the wheel brakes using compressed air. As soon as the compressed air, or any other suitable fluid, enters the actuator, the force on a piston is transmitted through a push-rod onto a brake lever or a hydraulic master cylinder. When the pressure is released, a spring pushed the piston, or a diaphragm back to its running condition.

US 5,002,164 describes an air-operated diaphragm spring brake wherein a push-rod extends through an aperture. Since the aperture is in open communication with the interior of a brake actuator, dust shields are frequently employed to prevent contaminants from entering the interior of the brake actuator. Such dust shields are typically flexible neoprene or rubber boots which move as the pushrod reciprocates and articulates. However, a minimum size, in particular length, of the push-rod is limited by the size of the dust shield.

A further brake actuator is described in EP 0692651 A1.

It would be therefore beneficial to provide a brake actuator with the same functionality and a reduced size.

According to the first aspect of the present invention, a brake actuator is described. The brake actuator comprises a housing having an inlet port for receiving a fluid, in particular compressed air, and a push-rod aperture. The housing arranged and configured to accommodate a first chamber connected to the in-let port, and a second chamber that includes the push-rod aperture. The first chamber and the second chamber are separated by a movable separation element arranged at the housing, such that a volume amount of the first chamber increases, and a volume amount of the second chamber decreases, when the fluid, in particular the compressed air, enters the first chamber via the inlet and actuates the separation element. The brake actuator further comprises a push-rod having a proximal end connected to the movable separation element, and a distal end protruding outside the housing via the push-rod aperture. The brake actuator further comprises a boot defining a boot inner volume for accommodating a middle section of the push-rod, the boot having a proximal end section connected to the push-rod at a region proximate the proximal end of the push-rod, and a distal end section connected to the housing at the push-rod aperture. The boot has at least one foldable boot segment in a longitudinal direction.

According to the invention, a cross-sectional area amount of the boot inner volume at the distal end section of the boot is larger than a maximum cross-sectional segment area of a first boot segment proximate the distal end section such that, in a folded state of the boot, the first boot segment is at least partially fitted inside the distal end section, thereby reducing an effective length of the boot in the actuated state. This, in turn, enables a reduction of the length of the push-rod. Thus, by using a push-rod with a reduced length, the size of the second chamber can be reduced compared to typical brake actuators and the brake actuator in accordance with the first aspect of the invention can be advantageously implemented in pneumatic systems where there is limited space available.

The functionality of the brake actuator of the first aspect of the present invention is fundamentally identical to known brake actuators that include a boot or bellow for dust protection, but the design of the boot enables the reduction of the length of the push road, which is limited by the effective length of the boot in the actuated stare. By allowing a degree of overlap between the distal end section of the boot and the boot segment proximate or adjacent to said distal end, the effective length of the boot is reduced, compared to the boots of the prior art, that have a substantially constant effective diameter, such that in an actuated state, each of the boot segments rests on top of the previous one, without any overlapping.

The configuration of the boot enables the use of a push-rod with a reduced length, which in turn enables a reduction of a longitudinal extension of the second chamber. This results in a reduced overall size of the brake actuator.

In the following, developments of the brake actuator of the first aspect of the present invention will be described.

In a preferred development, the fluid used for actuating the push-rod is compressed air. However, any other suitable fluid (gas or liquid) can be used in any of the developments.

In a preferred development, the boot is an elastic boot, in particular a boot consisting of or comprising an elastic material, such as rubber. However, in another development, the boot is made of rigid segments connected to each other, for instance through a mechanical bearing such as a hinge, and that allows a rotational movement between two adjacent segments.

In a development, the boot comprises a plurality of boot segments, and the cross-sectional area amount of the boot inner volume at the distal end section of the boot is larger than the maximum cross-sectional segment area of any boot segment of the plurality of boot segments. In yet another development, the maximum cross-sectional segment area of the respective boot segments decrease with increasing distance from the distal end section, such that there is a possible overlapping of any segment with the segment adjacent to it in the direction of the distal end section.

In another development wherein the movable separation element is an elastic separation element, in particular a diaphragm. When the compressed air enters the first chamber with the required pressure, the elastic element moves to accommodate the incoming compressed air. This movements actuate the push-rod, which is moved in the longitudinal direction such that a larger section thereof protrudes from the housing via the push-rod aperture. This is referred to as a diaphragm brake actuator and can be pneumatically or hydraulically driven. In a preferred development, the proximal end of the push-rod is connected to a piston that is attached to the elastic separation element. This provides a more effective transfer of the force exerted by the fluid in the first chamber to the push-rod.

In an alternative development, wherein the movable separation element is a rigid separable element, in particular a piston. This is referred to as a piston type brake actuator, which can be pneumatically or hydraulically driven. It is particularly preferred that a piston brake actuator further comprises a sealing member arranged and configured to seal the first chamber from the second chamber, in particular when the piston is actuated. The sealing member is preferably a toric joint or an o-ring arranged between the piston and an inner side of the housing.

In another development, which may also include any of the technical features described with respect to the previous developments, the boot comprises a transition section connecting the distal end section of the boot to the first boot segment, and wherein the transition section has a longitudinal component in the longitudinal direction when going from the distal end section to the first boot segment that is directed towards the distal end section. The longitudinal component is understood as the projection of the transition section on a longitudinal direction substantially corresponding to a longitudinal axis of the push-rod. When starting from that end of the transition section that is connected to the distal end section and moving towards the opposite end of the transition section, which is connected to the first boot segment, the projection on the longitudinal direction shifts towards the distal end section, i.e. away from the proximal end section of the boot or, in other words, away from the proximal end of the push-rod and toward the distal protruding end thereof.

Such an arrangement of the transition section favors the insertion, at least the partial insertion, of the first boot segment in the inner volume at the distal end section of the boot.

In a development, the boot comprises a proximal connection unit arranged at the proximal end section for connecting the boot to the push-rod. For example, in a development, the brake actuator comprises fasteners such as clamps, braces, retaining clips, bolts, rivets, screws or any other type of mechanical connectors known to the ordinary skilled in the art. In another development, the boot is glued to the push-rod.

Optionally, and also preferably, the push-rod comprises a cooperating connection unit arranged proximate the proximal end and configured to form a connection, preferably a releasable connection, with the proximal connection unit of the boot. For example, the push-rod may comprised threaded orifices and the boot may comprise orifices such that the it be effectively connected to the push-rod by means of screws.

Additionally, or alternative, wherein the boot comprises a distal connection unit arranged and configured to be connected to the housing at the or in the vicinity of the push-rod aperture. In a development, the boot is connected to the housing around the push-rod aperture by gluing. In an alternative development, the brake actuator includes a mechanical connector such as clamps, braces, retaining clips, bolts, rivets, screws or any other type of mechanical connectors known to the ordinary skilled in the art for connecting the distal end section of the boot to the housing such that the push-rod aperture directly connects the exterior of the brake actuator with the boot inner volume.

In a preferred development, the distal end section of the boot comprises a slot, in particular in a direction transversal to the longitudinal direction. The slot is arranged and configured to house a rim of the push-rod aperture, i.e. that section of the housing that defines or borders the push-rod aperture. The rim is then fitted in the slot to provide a tight connection between the distal end section of the boot and the housing. In another development, the housing rim comprises a slot in which the distal end section of the boot can be inserted for fixating the boot to the housing.

In another development, the brake actuator is further configured as spring-brake actuator, wherein the housing further accommodates a parking brake chamber comprising a spring loaded parking brake piston that is configured to actuate the movable separation element upon reception of a parking brake signal. Thus, the movable separation element can be actuated in two different ways, i.e. either pneumatically by means of the fluid (e.g., compressed air) entering the first chamber, or mechanically, by means of the spring loaded parking brake piston, that is provided in the parking brake chamber. The housing comprises a dividing wall section between the fist chamber and the parking brake chamber, which has an opening such that the spring loaded parking brake piston, in particular a piston rod connected thereto, can actuate the mov-able separation element, which is preferably but not necessarily an elastic separation element such as a diaphragm.

A second aspect of the invention is directed to a boot, in particular to an elastic boot, for use in a brake actuator in accordance with the first aspect of the invention. The boot defines a boot inner volume for accommodating a middle section of a push-rod. The boot has a proximal end section that is connectable to the push-rod at a region proximate a proximal end of the push-rod, and a distal end section connectable to a housing of the brake actuator at a push-rod aperture. The boot has at least one foldable boot segment in a longitudinal direction L.

In the boot according to the second aspect of the invention, a cross-sectional area amount of the boot inner volume at the distal end section of the boot is larger than a maximum cross-sectional segment area of a first boot segment proximate the distal end section, such that, in a folded state of the boot, the first boot segment is at least partially fitted inside the distal end section.

In a preferred embodiment, the boot further comprises a transition section connecting the distal end section of the boot to the first boot segment, and wherein the transition section has a longitudinal component in the longitudinal direction that is directed towards the distal end of the boot when going from the distal end section to the first boot segment.

A third aspect of the invention is directed to a use of a boot in accordance with the second aspect of the invention in a brake actuator, in particular in a brake actuator of a commercial vehicle, and preferably in a brake actuator according to the first aspect of the invention.

A fourth aspect of the invention is formed by a braking system, in particular a braking system of a commercial vehicle, and wherein the braking system comprises a fluid supply unit, in particular a compressed air supply unit, for supplying fluid for operation of the braking system, a brake actuator in accordance with the first aspect of the invention, wherein the inlet port is connected to the fluid supply unit for receiving the fluid for filling the first chamber and actuating the movable separation element, and a braking unit connected to the distal end of the push-rod of the brake actuator and configured to apply, when the push-rod is actuated, a braking force on a movable element, in particular on a wheel of the commercial vehicle.

It shall be understood that a preferred embodiment of the present invention can also be any combination of the dependent claims or above embodiments with the respective independent claim.

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art. It should be borne in mind that numerous modifications and changes can be made to the form and detail of an embodiment without deviating from the scope of the invention, which is defined by the appended claims. The features of the invention disclosed in the description, in the drawings and in the claims may be essential for the further development of the invention, either individually or in any combination.

The following drawings show in:
Fig. 1 a schematic cross-sectional view of a known brake actuator;
Fig. 2 a schematic cross-sectional view of a first embodiment of a brake actuator according to the invention;
Fig. 3 a schematic cross-sectional view of a first embodiment of a boot for use in a brake actuator according to the invention;
Fig. 4 a schematic cross-sectional view of a second embodiment of a brake actuator according to the invention;
Fig. 5 a schematic cross-sectional view of a second embodiment of a boot for use in a brake actuator according to the invention;
Fig. 6 a schematic cross-sectional view of a third embodiment of a brake actuator according to the invention;
Fig. 7 a schematic block diagram of a commercial vehicle including a first embodiment of a pneumatic braking system in accordance with the invention.

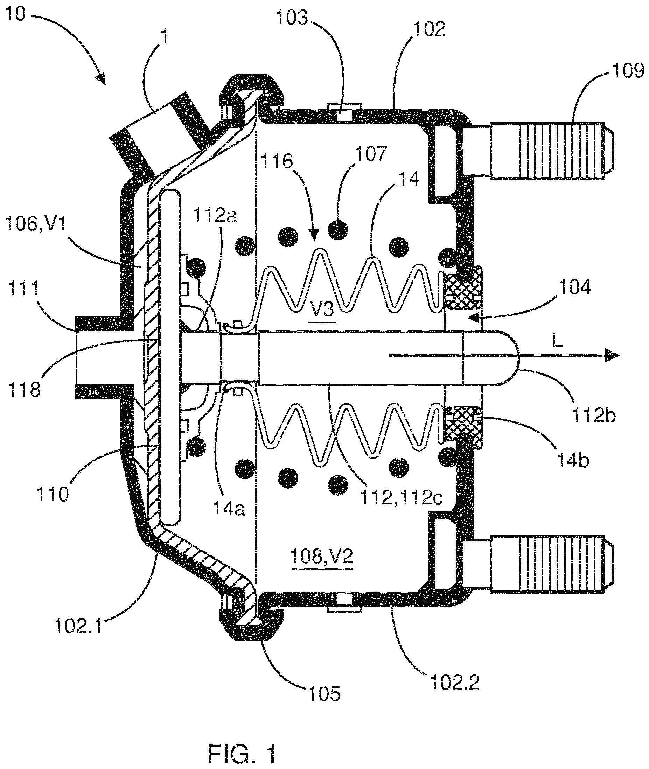

Fig. 1 shows a schematic cross-sectional view of a known brake actuator 10 typically used in braking systems of commercial vehicles. The brake actuator 10, comprises a housing 102 having an inlet port 1 for receiving a fluid, in this particular case compressed air, and a push-rod aperture 104. The housing is formed by a first, proximal, housing section 102.1 and a second, distal, housing section 102.2 In this particular comparative example, the inlet port 1 is arranged as an opening in the first housing section 102.1 and the push-rod aperture is arranged as an opening in the second housing section 101.2. Both housing sections are connected to each other by means of a connection element 105, such as a connecting clamp. The housing 102 is arranged and configured to accommodate a first chamber 106 connected to the inlet port 1, and a second chamber 108 that includes the push-rod aperture 104. The first chamber 106 and the second chamber 108 are separated by a movable separation element 110 arranged at the housing 102, in particular held in place by the connection element 105, such that a volume amount V1 of the first chamber 106 increases, and subsequently, a volume amount V2 of the second chamber 108 decreases (given that the housing defines a fixed inner volume V1 +V2), when the fluid, i.e. the compressed air, enters the first chamber 106 via the in-let 1 and actuates the separation element 110 by driving it towards the push-rod aperture. The brake actuator 10, further comprises a push-rod 112 that has a proximal end 112a connected to the movable separation element 110, in this particular example via a piston 118, and a distal end 112b protruding outside the housing 102 via the push-rod aperture 104. Thus, when the compressed air enters the first chamber and the movable separation element is driven the piston is moved along a longitudinal direction L such that a larger section thereof protrudes from the push-rod aperture. This movement is performed against an elastic force exerted by a spring element 107 arranged in the second chamber such that, when the compressed air in the first chamber 106 is exhausted, the spring element 107 returns the push rod 112 to the unactuated position shown in Fig. 1. During the actuation, the air in the second chamber 108 is exhausted via exhaust opening 103, through which air is also drawn when the push-rod 112 returns to its unactuated position. This exhaust opening 103 may be connected to the environment such that dust or dirt may enter the second chamber 108. In order to shield the push-rod 112 and the push-rod aperture 104 from this dirt, the brake actuator comprises a boot for accommodating a middle section 112c of the push-rod 112. The boot 14 has a proximal end section 14a connected to the push-rod 112 at a region proximate the proximal end 112a of the push-rod 112, and a distal end section 14b connected to the housing 102 at the push-rod aperture 104. The boot 14 of Fig. 1 has 4 fold-able boot segments 116 in the longitudinal direction L.

In an actuated state, i.e., in a state where compressed air fills the first chamber 106 and the push-rod 112 is moved to a final actuated position, the effective length of that section of the push-rod 112 that remains within the second chamber 108 is limited by the minimum effective length of the boot 114 in a completely folded position. In the case shown in Fig. 1 and for a given constant boot wall thickness of "d" mm, this minimum effective length is at least "8 x d", since each of the four boot segments contributed with two segment sections, each corresponding to one of the two flank portions of the corresponding segment. A flank portion of a boot segment links a root portion with a corresponding crest portion of the boot segment.

The brake actuator 10 may be also configured as a spring-brake actuator, wherein the housing 102 further accommodates a parking brake chamber comprising a spring loaded parking brake piston that is configured to actuate the movable separation element upon reception of a parking brake signal (not shown). The spring loaded parking brake piston actuates a brake piston rod that is arranged inside the additional opening 111 for actuating the movable separation element 110, which in this particular example is an elastic separation element in the form of a diaphragm.

The brake actuator 10 can be attached to an external structure by means of suitable connection elements 109 such as screws.

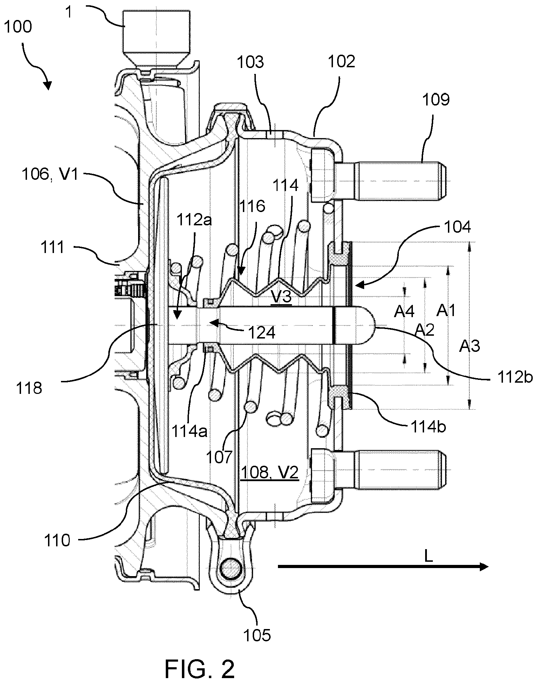

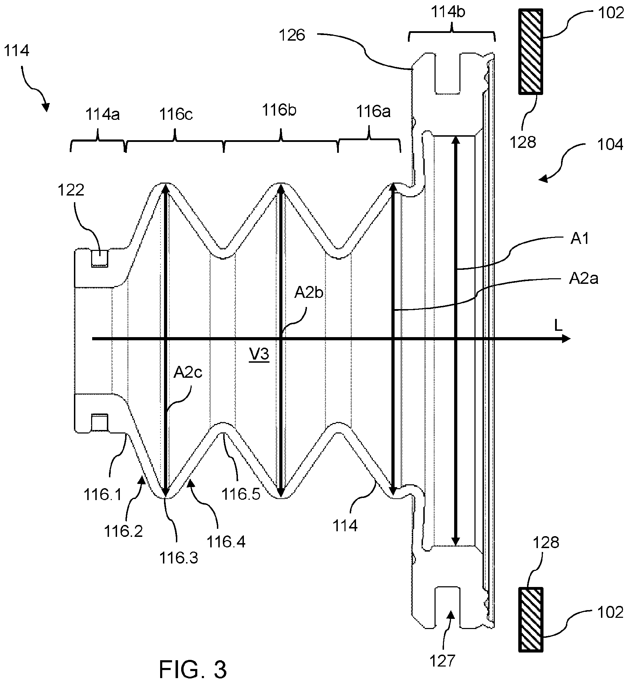

Fig. 2 shows a schematic cross-sectional view of a first embodiment of a brake actuator 100 according to the invention where the effective length of the push-rod 112 can be reduced in comparison to the brake actuator 10 of Fig. 1. The following discussion will focus on those technical feature that differ from those shown in Fig. 1. Those technical features having an identical or similar function will be referred to using the same reference numbers. The brake actuator 100 is substantially similar to the brake actuator 10 of Fig. 1. However, in the boot 114, a cross-sectional area amount A1 of the boot inner volume V3 deter-mined at the distal end section 114b of the boot 114, is larger than a maximum cross-sectional segment area A2 of a first boot segment 116a (see Fig. 3) proximate the distal end section 114b such that, in a folded state of the boot 114, the first boot segment 116a is at least partially fitted inside the distal end section 114b. Thus, the minimum effective length of the boot 114 in a completely folded position can be reduced due to the fact that, in the folded, actuated position, at least part of the boot, in particular at least part of that boot segment 116a proximate or adjacent the distal end section 114b is inserted in the volume delimited by the distal end section 114b. Exemplary values for the diameter of the circular sections given raise to the cross sectional areas A1, A2, A2 and A4 are 50 mm for cross sectional area A1, 40 mm for cross sectional area A2, 70 mm for cross sectional area A3 and 24 mm for cross sectional area A4.

The operation of the brake actuator 100 of Fig. 2 is similar to that of brake actuator 10 of Fig. 1. When a service braking system is actuated, compressed air provided by an external compressed air supply flows through the inlet port 1 and into the first chamber 106. The pressure building up in said first chamber acts on the movable separation element 110, in this example a diaphragm, and pushes it, together with the piston 118, towards the push rod aperture 104, against the force of the pressure spring 107. A force, being pressure times sur-face, is being transferred via the push rod 112 onto an external braking unit (not shown). for example to a piston of a flanged master brake cylinder. The air present in the second chamber 108 exits it via the exhaust openings 103. When the braking process is ended, the pressure in the first chamber 106 is reduced, for instance by an upstream brake valve. At the same time, the spring element 107 returns both the piston 118 and the diaphragm 110 to their original positions. Air from an exterior penetrates in the second chamber via exhaust openings 103 when the diaphragm, as a movable separation element 110, the push-rod 112 and the piston 118 return to their original positions. The boot 114 shields the inner boot volume V3 from dust or dirt present in the air. In some embodiments, the diaphragm actuators can have a wear and/or stroke indicator fitted for the driver to see which condition the wheel brakes are in.

The boot 114 has a proximal end section 114a, a distal end section 114b and three boot segments 116 arranges between them. A largest cross sectional area of the boot 114, perpendicular to the longitudinal direction, corresponds to the distal end section 114b and is indicated as A3 in Fig. 2. The boot inner volume V3 has a largest cross-sectional area also in the region of the distal end section 114b, and it is indicated as A1. The difference between A3 and A1 thus corresponds to a maximum thickness of the boot 114 in the distal end section 114b. Further, the value A2 corresponds to the maximum cross-sectional segment area A2 of the boot segments 116, and the value A4 corresponds to the minimum cross-sectional segment area of the boot segments 116. The minimum cross sectional area of the boot 114 corresponds to the cross sectional area of the push-rod 112 and is located in the proximal end region 114a.

The inventive configuration of the boot 116 enables the use of a push-rod 112 with a reduced length compared to that of the push rod of Fig. 1. This, in turn, enables a reduction of a longitudinal extension of the second chamber 102, i.e., an extension in the longitudinal direction L. Thus, the actuator 100 can have a reduced overall size compared to know actuators, such as actuator 10 of Fig. 1.

The configuration of the boot 114 is shown more clearly in Fig. 3, which shows a schematic cross-sectional view of a first embodiment of a boot 114 for use in a brake actuator according to the invention. The boot 114 of Fig 1 includes a proximal end section 114a configured and dimensioned to be in contact with the push-rod, and a distal end section 114b for connection to the housing 102 at the push-rod aperture 104. The housing 102 is shown in Fig. 2 in an un-mounted state. The boot 114 comprises three boot segments 116a, 116b and 116c. Boot segment 116a is proximate the distal end section 114b, boot segment 116c is proximate the proximal end section 144a and boot segment 116b is arranged between boot segments 116a and 116c. Three is not a limitative number of boot segments, and other suitable boots may include any number of boot segments. Each of the boot segments, for example 116c start at a first root portion 116.1, includes a first flank portion 116.2 that ends at a crest portion 116.3 and the includes a second flank portion 116.4 that ends at a second root portion 116.5 that also corresponds to the first root portion of the neighboring boot segment 116.c. A respective maximum cross-sectional segment area A2a, A2b and A2c is defined by the periphery of the boot 114 at the crest portions 116.3 of the respective boot segments 116a, 116b, 116c.

In the boot in accordance with the invention, a cross-sectional area amount A1 of the boot inner volume V3 at the distal end section 114b of the boot 114 is larger than a maximum cross-sectional segment area A2 of the first boot segment 116a proximate the distal end section 114b such that, in a folded state of the boot 114, the first boot segment 116a is at least partially fitted inside the distal end section 114b. The relation between the cross-sectional area amount A1 and the maximum cross-sectional segment area A2a of the first boot segment 116a is such that a projection of the first boot segment 116a on a plane defined by the distal end section 114b and perpendicular to the longitudinal direction L lies completely within the cross-sectional area A1 of the boot inner volume V3 at the distal end section 114b. In this exemplary embodiment, the cross-sectional area amount A1 of the boot inner volume V3 at the distal end section 114b of the boot 114 is larger than the maximum cross-sectional segment area A2a, A2b, A2c of any boot segment 116a, 116b, 116c of the plurality of boot segments, in particular, the a cross-sectional area amounts A2a, A2b and A2c of the three boot segments 116a, 116b and 116c are equal. However, in other embodiments, the cross-sectional area amounts may differ. In some embodiments (not shown), the cross-sectional area amount A2b, A2c of a boot segment 116b, 116c that is not proximate the distal end section 114b can be larger than the cross-sectional area amount A1 of the boot inner volume V3 at the distal end section 114b.

The boot 114 of Fig. 3 also comprises a proximal connection unit 122 arranged at the proximal end section 114a for connecting the boot 114 to the push-rod (not shown). In this particular embodiment, the proximal connection unit 122 is a clamp. In alternative embodiments the proximal connection unit comprises other fasteners such as braces, retaining clips, bolts, rivets, screws or any other type of mechanical connectors known to the ordinary skilled in the art. In another embodiment, the boot 114 is glued to the push-rod at the proximal end section 114a.

Optionally, as exemplarily shown in Fig. 2, the push-rod 112 comprises a cooperating connection unit 124 arranged proximate the proximal end 112a and configured to form a connection, preferably a releasable connection, with the proximal connection 122 unit of the boot 114. In Fig. 2, the cooperating connection unit 124 comprises a recess arranged and configured to receive the proximal end section 114a of the boot 114 and to hinder a movement of the proximal end section 114a relative to the push-rod 112.

Also, the boot 114 comprises a distal connection unit 126 arranged and configured to be connected to the housing 102 at the or in the vicinity of the push-rod aperture 104. In particular, the distal end section 114b of the boot 114 comprises a slot 127 arranged and configured to house a rim 128 of the push-rod aperture 104.

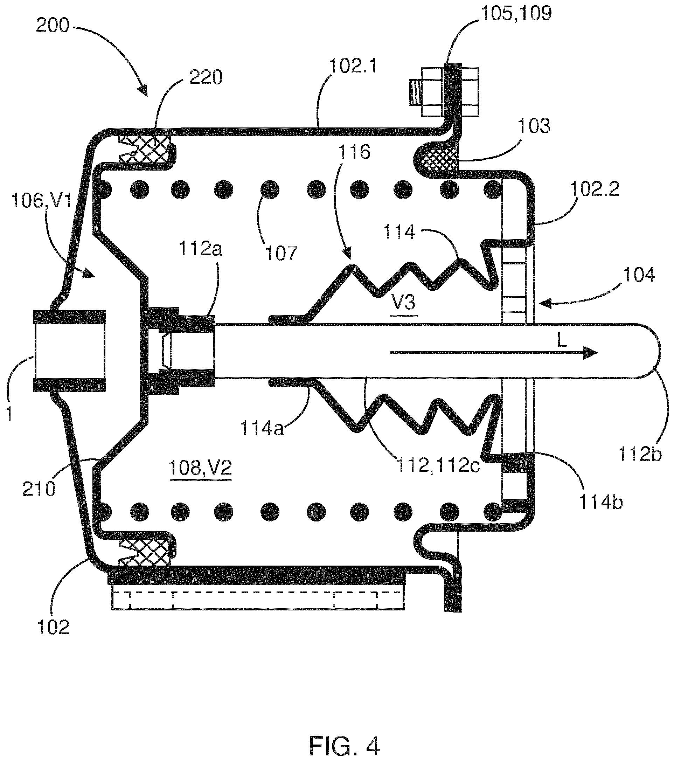

Fig. 4 shows a schematic cross-sectional view of a second embodiment of a brake actuator 200 according to the invention. The following discussion will focus on those technical features of the brake actuator 200 that differ from those of the brake actuator 100 shown in Fig. 3. Those technical features having an identical or similar function will be referred to using the same reference numbers. The brake actuator 200 is a piston type actuator wherein the movable separation element is a rigid separation element such as a piston 210 instead of an elastic separation element as the diaphragm 110 of Figs. 1 and 2. The brake actuator 200 further comprises a sealing member 220 that arranged and configured to seal the first chamber 106 from the second chamber 108, in particular when the piston 210 is actuated. The sealing member 220 is arranged between the piston 210 and the housing 102, and is preferably a toric joint. The piston 210 may include a retaining structure for holding the sealing member in place with respect to the piston 210 during operation. In this particular embodiment, and to ensure a tight sealing, the first housing section 102.1 and the second housing section 102.2 are connected at a position that is not within the movement range of the piston 210.

In the case of the piston type brake actuator 200, when a service braking system is actuated, compressed air from provided by a compressed air supply (not shown) flows through the inlet port 1 and into the first chamber 106. The pressure building up there forces the piston 210 towards the push-rod aperture 104 against the force of the pressure spring 107. A Force being pressure times sur-face, is transferred via the push rod 112, for example onto a piston of a flanged master brake cylinder. The air present in the second chamber 108 exits it via the exhaust opening 103. When the braking process is ended, the pressure in the first chamber 106 is reduced, for instance by an upstream brake valve. At the same time, the spring element 107 returns the piston 210 to its original position. Air from an exterior penetrates in the second chamber via exhaust opening 103 when the piston 210, and the push-rod 112 connected thereto return to their original positions. The boot 114 shields the inner boot volume V3 from dust or dirt present in the air.

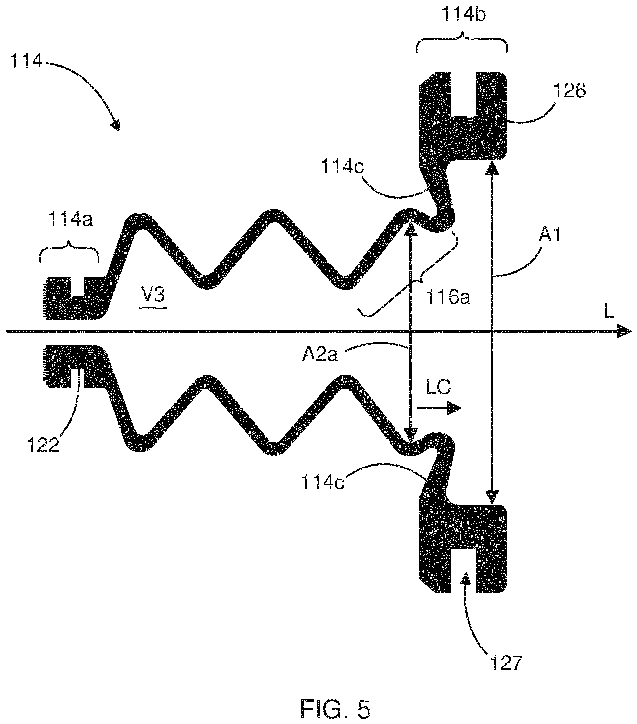

Fig. 5 shows a schematic cross-sectional view of a second embodiment of a boot 114 for use in a brake actuator according to the invention. The following discussion will focus on those technical features of boot 114 of Fig. 5 that differ from those of the boot shown in actuator 100 shown in Fig. 3. Those technical features having an identical or similar function will be referred to using the same reference numbers. The boot 114 of Fig. 5 comprises a transition section 114c connecting the distal end section 114b of the boot 114 to the first boot segment 116a, wherein the transition section 114c has a longitudinal component LC in the longitudinal direction L, determined from the distal end section 114b to the first boot segment 116a, that is directed towards the distal end section 114b. The longitudinal component LC is understood as the projection of the transition section 114c on the longitudinal direction L. When starting from that end of the transition section 114c that is connected to the distal end section 114b, and moving towards the opposite end of the transition section 114c, which is connected to the first boot segment 116a, the projection on the longitudinal direction L shifts towards the distal end section 114b, i.e. away from the proximal end section of the boot 114a.

Such an arrangement of the transition section 114c favors the insertion, at least the partial insertion, of the first boot segment 116a in the boot inner volume V3 at the distal end section 114b of the boot 114.

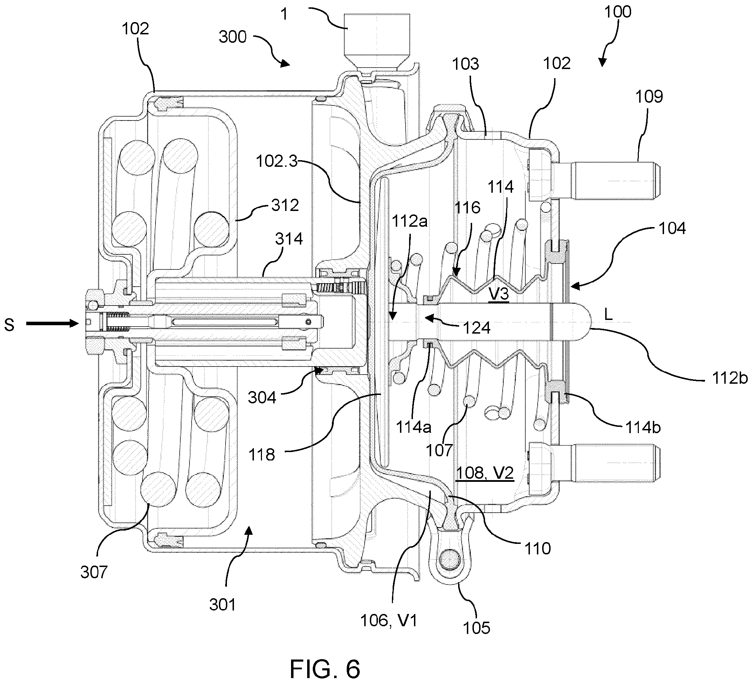

Fig. 6 shows a schematic cross-sectional view of a third embodiment of a brake actuator 300 according to the invention. The brake actuator 300 is formed by a brake actuator 100 according to Fig. 2 and a parking brake chamber 301 comprising a spring loaded parking brake piston 312 that is configured to actuate the movable separation element 110 upon reception of a parking brake signal S. Thus, the movable separation element 110, in this particular nonlimiting example, an elastic separation element, can be actuated in two different ways, i.e. either pneumatically by means of the fluid (e.g., compressed air) entering the first chamber 106, as explained with reference to Fig. 2, or mechanically, by means of the spring loaded parking brake piston 312, that is provided in the parking brake chamber 301. The housing 102 comprises a dividing wall section 102.3 between the fist chamber 106 and the parking brake chamber 301, which has an opening 304 such that the spring loaded parking brake piston 312, in particular a piston rod 314 connected thereto, can actuate the movable separation element 110 through the opening 304.

The brake actuator 300 has therefore a combined spring brake-diaphragm brake chambers and can be referred to as a spring brake actuator. It can be used to generate the brake force for the wheel brakes. It includes a diaphragm portion for the service braking system (see Figs. 2 and 4 and the corresponding description) and the spring loaded portion (parking brake chamber 301) for the auxiliary and parking braking systems.

For operation of the service braking system, when the service braking system is actuated, compressed air flows into the first chamber 1 via inlet port 1, acting on diaphragm 110 as explained above. The brake chambers, i.e., the first 106 and second 108 chambers operate independently from its spring-loaded portion.

For operation of the parking brake, when the parking brake is actuated, a parking brake signal is received that causes the pressure in the parking brake chamber 301 to be fully or partially released via a release port (not shown). In this process, the force of the relaxing compression spring 307 acts on the wheel brake via the spring loaded parking brake piston 312 and the push-rod 314 connected thereto. The maximum braking force of the spring-loaded portion is achieved when the parking brake chamber 301 is pressureless. Since this braking force is achieved exclusively by mechanical means, i.e. by compression spring 307, the spring-loaded portion may be used for the parking brake. When the brake is released, the pressure is once again increased in the parking brake chamber 301 via an input port, which can be the same as the release port (not shown).

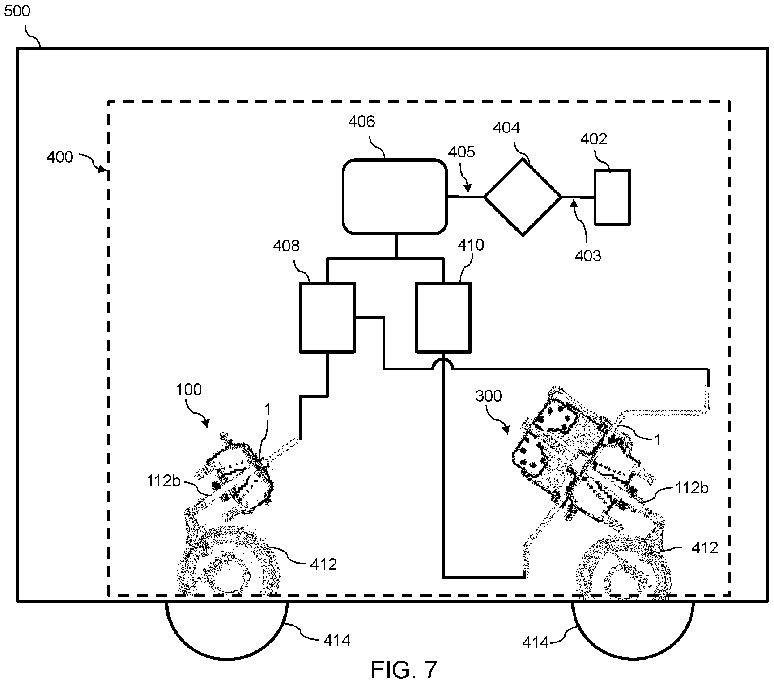

Fig. 7 shows a schematic block diagram of a commercial vehicle 500 including a braking system 400, pneumatic, or hydraulic, in accordance with the invention. The braking system 400 comprises a fluid supply unit, in particularly a compressed air supply unit 402, such as a compressor, for supplying compressed air 403 for the braking system 400. It also comprises brake actuators 100, 300, wherein the inlet port 1 is connected to the fluid supply unit 402 for receiving the compressed air that is used for filling the first chamber 106 and actuating the movable separation element 110. The braking system 400 also includes braking units 412 connected to a respective distal end 112b of the push-rod 112 of the brake actuators 100, 300 and configured to apply, when the push-rod 122 is actuated, a braking force on a movable element, in particular on a wheel 414, of the commercial vehicle 500.

Preferably, the compressed air is dried and optionally filtered at an air processing unit comprising an air dryer 404. The dried compressed air 405 is preferably stored in an air-reservoir unit 406 comprising one or more air reservoirs.

When the brake valve (e.g. brake pedal) 408 is actuated, compressed air flows, preferably via an ABS solenoid control valve (not shown) into the first chambers of the brake actuator 100 and the spring brake actuator 300. The pressure in the brake cylinders generating the force required for the wheel brake de-pends on the amount of force applied to the brake valve 408. Also, the air reservoir unit 406 is connected via a hand brake valve 410 to the spring-loaded portion of the spring brake actuator 300. When the hand brake valve 410 is actuated and locked, the spring-loaded portions of the spring brake actuators 300 are exhausted fully. The force needed for the wheel brake is now provided by the heavily preloaded springs 307 of the spring brake actuators.

In summary, The invention is directed to a brake actuator comprising a housing with an inlet port for receiving a fluid, and a push-rod aperture, and configured to accommodate a first chamber connected to the inlet port and a second chamber that includes the push-rod aperture. The first chamber and the second chamber are separated by a movable separation element to which a push-rod is connected that protrudes outside the housing via the push-rod aperture. A boot defining an inner volume has a proximal end section connected to the push-rod and a distal end section connected to the housing, wherein a cross-sectional area amount of the inner volume at the distal end section is larger than a cross-sectional segment area of a boot segment, thus enabling a reduction of a length of the push rod.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### List of reference signs (Part of the description)

- 1: Inlet port
- 10: Brake actuator, comparative example
- 14: Boot, comparative example
- 14a: Proximal end section of boot 14
- 14b: Distal end section of boot 14
- 100: Brake actuator, diaphragm brake actuator
- 102: Housing
- 102.1: First housing section
- 102.2: Second housing section
- 102.3: Dividing wall section
- 103: Exhaust opening
- 104: Push-rod aperture
- 105: Connection element connecting first and second housing section
- 106: First chamber
- 107: Spring element
- 108: Second chamber
- 109: Connection element
- 110: Movable separation element
- 111: Additional opening
- 112: Push-rod
- 112a: Proximal end of push-rod
- 112b: Distal protruding end of push-rod
- 112c: Middle section of push-rod
- 114: Boot
- 114a: Proximal end section of boot
- 114b: Distal end section of boot
- 114c: Transition section of boot
- 116: Boot segment
- 116a: First boot segment proximate distal end section
- 116b: Second boot segment
- 116c: Third boot segment proximate proximal end section
- 116.1: First root portion of boot segment
- 116.2: First flank portion of boot segment
- 116.3: Crest portion of boot segment
- 116.4: Second flank portion of boot segment
- 116.5: Second root portion of boot segment
- 118: Piston
- 122: Proximal connection unit
- 124: Cooperating connection unit
- 126: Distal connection unit
- 127: Slot
- 128: Rim
- 200: Brake actuator, piston type brake actuator
- 210: Piston
- 220: Sealing member
- 300: Brake actuator, spring brake actuator
- 301: Parking brake chamber
- 304: Opening at the dividing wall section
- 307: Compression spring, preloaded spring
- 312: Spring loaded parking brake piston
- 314: Push-rod
- 400: Braking system
- 402: Compressed air supply unit
- 403: Compressed air
- 404: Air-drying unit, air-dryer
- 405: Dried compressed air
- 406: Compressed air reservoir
- 408: Brake valve, brake pedal
- 410: Hand brake valve
- 412: Braking unit
- 414: Movable element, wheel
- 500: Commercial vehicle
- A1: Cross-sectional area amount of inner volume at distal end section
- A2: Cross-sectional segment area amount of boot segment
- A2a: Cross-sectional segment area amount of first boot segment
- A2b: Cross-sectional segment area amount of second boot segment
- A2c: Cross-sectional segment area amount of third boot segment
- A3: Largest cross sectional area of boot
- A4: Minimum cross-sectional segment area of boot segments
- L: Longitudinal direction
- LC: Longitudinal component of transition section
- S: Braking signal
- V1: Volume amount of first chamber
- V2: Volume amount of second chamber
- V3: Boot inner volume amount

## Claims

1. Brake actuator (100, 200, 300), comprising a housing (102) having an inlet port (1) for receiving a fluid, particularly compressed air (403, 405), and a push-rod aperture (104), the housing (102) arranged and configured to accommodate
- a first chamber (106) connected to the inlet port (1); and
- a second chamber (108) that includes the push-rod aperture (104), and
wherein
the first chamber (106) and the second chamber (108) are separated by a movable separation element (110) arranged at the housing (102), such that a volume amount (V1) of the first chamber (106) increases and a volume amount (V2) of the second chamber (108) decreases when the fluid enters the first chamber (106) via the inlet (1) and actuates the separation element (110);
the brake actuator (100), further comprising:
- a push-rod (112) having a proximal end (112a) connected to the movable separation element (110), and a distal end (112b) protruding outside the housing (102) via the push-rod aperture (104); and
- a boot (114) defining a boot inner volume (V3) for accommodating a middle section (112c) of the push-rod (112), the boot (114) having a proximal end section (114a) connected to the push-rod (112) at a region proximate the proximal end (112a) of the push-rod (112), and a distal end section (114b) connected to the housing (102) at the push-rod aperture (104); the boot (114) having at least one foldable boot segment (116) in a longitudinal direction (L);
**characterized in that**
a cross-sectional area amount (A1) of the boot inner volume (V3) at the distal end section (114b) of the boot (114) is larger than a maximum cross-sectional segment area (A2) of a first boot segment (116a) proximate the distal end section (114b) such that, in a folded state of the boot (114), the first boot segment (116a) is at least partially fitted inside the distal end section (114b).

2. The brake actuator (100, 200, 300) of claim 1, wherein the cross-sectional area amount (A1) of the boot inner volume (V3) at the distal end section (114b) of the boot (114) is larger than the maximum cross-sectional segment area (A2a, A2b, A2c) of any boot segment (116a, 116b, 116c) of the one or more boot segments (116).

3. The brake actuator (100, 300) according to any of the preceding claims, wherein the movable separation element (110) is an elastic separation element (110), in particular a diaphragm (110).

4. The brake actuator (100, 300) according to claim 3, wherein the proximal end (112a) of the push-rod (112) is connected to a piston (118) that is attached to the elastic separation element (110).

5. The brake actuator according (200) to any of the claims 1 to 3, wherein the movable separation element (210) is a rigid separation element (210), in particular a piston (210).

6. The brake actuator (200) of claim 5, further comprising a sealing member (220) arranged and configured to seal the first chamber (106) from the second chamber (108), in particular when the piston (210) is actuated.

7. The brake actuator (100, 200, 300) according to any of the preceding claims, wherein the boot (114) comprises a transition section (114c) connecting the distal end section (114b) of the boot (114) to the first boot segment (116a), and wherein the transition section (114c) has a longitudinal component (LC) in the longitudinal direction (L) when going from the distal end section (114b) to the first boot segment (116a) that is directed towards the distal end section (114b).

8. The brake actuator (100, 200, 300) according to any of the preceding claims, wherein
- the boot (114) comprises a proximal connection unit (122) arranged at the proximal end section (114a) for connecting the boot (114) to the push-rod (112), and wherein, optionally
- the push-rod (112) comprises a cooperating connection unit (124) arranged proximate the proximal end (112a) and configured to form a connection, preferably a releasable connection, with the proximal connection (122) unit of the boot (114).

9. The brake actuator (100, 200, 300) according to any of the preceding claims, wherein the boot (114) comprises a distal connection unit (126) arranged and configured to be connected to the housing (102) at the or in the vicinity of the push-rod aperture (104).

10. The brake actuator (100, 200, 300) according to of any of the preceding claims, wherein the distal end section (114b) of the boot (114) comprises a slot (127) arranged and configured to house a rim (128) of the push-rod aperture (104).

11. The brake actuator (300) according to any of the preceding claims, wherein the housing (102) further accommodates a parking brake chamber (301) comprising a spring loaded parking brake piston (312) that is configured to actuate the movable separation element (110) upon reception of a parking brake signal (S).

12. Boot (114), for use in a brake actuator (100, 200, 300) in accordance with any of the preceding claims 1 to 11, the boot (114) defining a boot inner volume (V3) for accommodating a middle section (112c) of a push-rod (112), the boot (114) having a proximal end section (114a) connectable to the push-rod (112) at a region proximate a proximal end (112a) of the push-rod (112), a distal end section (114b) connectable to a housing (102) of the brake actuator (100, 200, 300) at a push-rod aperture (104); the boot (114) having at least one foldable boot segment (116, 116a, 116b, 116c) in a longitudinal direction L, **characterised in that** a cross-sectional area amount (A1) of the boot inner volume (V3) at the distal end section (114b) of the boot (114) is larger than a maximum cross-sectional segment area (A2a) of a first boot segment (116a) proximate the distal end section (114b), such that, in a folded state of the boot (114), the first boot segment (116a) is at least partially fitted inside the distal end section (114b).

13. The boot (114) according to claim 12, further comprising a transition section (114c) connecting the distal end section (114b) of the boot (114) to the first boot segment (116a), and wherein the transition section (114c) has a longitudinal component (LC) in the longitudinal direction (L) that is directed towards the distal end of the boot when going from the distal end section of the boot to the first boot segment.

14. Use of a boot (114) in accordance with claim 12 or 13 in a brake actuator, in particular in a brake actuator of a commercial vehicle.

15. Braking system (400), in particular braking system of a commercial vehicle (500), comprising
- a fluid supply unit, in particularly a compressed air supply unit (402) for supplying fluid (403) for the braking system (400)
- a brake actuator (100, 200, 300) in accordance with any of the claims 1 to 11, wherein the inlet port (1) is connected to the fluid supply unit (402) for receiving fluid filling the first chamber (106) and actuating the movable separation element (110);
a braking unit (412) connected to the distal end (112b) of the push-rod (112) of the brake actuator (100, 200, 300) and configured to apply, when the push-rod (122) is actuated, a braking force on a movable element (414), in particular on a wheel (414) of the commercial vehicle (500).

## Patentansprüche

1. Bremszylinder (100, 200, 300), umfassend ein Gehäuse (102), das einen Einlassanschluss (1) zum Empfangen eines Fluids, insbesondere Druckluft (403, 405), und eine Schubstangenöffnung (104) aufweist, wobei das Gehäuse (102) angeordnet und konfiguriert ist, um
- eine erste Kammer (106), die mit dem Einlassanschluss (1) verbunden ist; und
- eine zweite Kammer (108), die die Schubstangenöffnung (104) einschließt, aufzunehmen, und wobei
die erste Kammer (106) und die zweite Kammer (108) durch ein bewegbares Trennelement (110), das an dem Gehäuse (102) angeordnet ist, derart getrennt sind, dass sich eine Volumenmenge (V1) der ersten Kammer (106) erhöht und eine Volumenmenge (V2) der zweiten Kammer (108) verringert, wenn das Fluid in die erste Kammer (106) über den Einlass (1) eintritt und das Trennelement (110) betätigt; der Bremsaktuator (100) ferner umfassend:
- eine Schubstange (112), die ein proximales Ende (112a), das mit dem bewegbaren Trennelement (110) verbunden ist, und ein distales Ende (112b), das über die Schubstangenöffnung (104) außerhalb des Gehäuses (102) herausragt, aufweist; und
- einen Faltenbalg (114), der ein Faltenbalginnenvolumen (V3) zum Aufnehmen eines Mittelabschnitts (112c) der Schubstange (112) definiert, wobei der Faltenbalg (114) einen proximalen Endabschnitt (114a), der mit der Schubstange (112) in einem Bereich in der Nähe des proximalen Endes (112a) der Schubstange (112) verbunden ist, und einen distalen Endabschnitt (114b), der mit dem Gehäuse (102) an der Schubstangenöffnung (104) verbunden ist, aufweist; wobei der Faltenbalg (114) mindestens ein faltbares Faltenbalgsegment (116) in einer Längsrichtung (L) aufweist; **dadurch gekennzeichnet, dass**
eine Querschnittsflächenmenge (A1) des Faltenbalginnenvolumens (V3) an dem distalen Endabschnitt (114b) des Faltenbalgs (114) größer als eine maximale Querschnittssegmentfläche (A2) eines ersten Faltenbalgsegments (116a) in der Nähe des distalen Endabschnitts (114b) ist, derart, dass, in einem gefalteten Zustand des Faltenbalgs (114), das erste Faltenbalgsegment (116a) mindestens teilweise innerhalb des distalen Endabschnitts (114b) eingepasst ist.

2. Bremszylinder (100, 200, 300) nach Anspruch 1, wobei die Querschnittsflächenmenge (A1) des Faltenbalginnenvolumens (V3) an dem distalen Endabschnitt (114b) des Faltenbalgs (114) größer als die maximale Querschnittssegmentfläche (A2a, A2b, A2c) von dem beliebigen Faltenbalgsegment (116a, 116b, 116c) des einen oder der mehreren Faltenbalgsegmente (116) ist.

3. Bremszylinder (100, 300) nach einem der vorstehenden Ansprüche, wobei das bewegbare Trennelement (110) ein elastisches Trennelement (110), insbesondere eine Membran (110), ist.

4. Bremszylinder (100, 300) nach Anspruch 3, wobei das proximale Ende (112a) der Schubstange (112) mit einem Kolben (118) verbunden ist, der an dem elastischen Trennelement (110) angebracht ist.

5. Bremszylinder (200) nach einem der Ansprüche 1 bis 3, wobei das bewegbare Trennelement (210) ein starres Trennelement (210), insbesondere ein Kolben (210), ist.

6. Bremszylinder (200) nach Anspruch 5, ferner umfassend ein Dichtungselement (220), das angeordnet und konfiguriert ist, um die erste Kammer (106) von der zweiten Kammer (108) abzudichten, insbesondere wenn der Kolben (210) betätigt wird.

7. Bremszylinder (100, 200, 300) nach einem der vorstehenden Ansprüche, wobei der Faltenbalg (114) einen Übergangsabschnitt (114c) umfasst, der den distalen Endabschnitt (114b) des Faltenbalgs (114) mit dem ersten Faltenbalgsegment (116a) verbindet, und wobei der Übergangsabschnitt (114c) eine Längskomponente (LC) in Längsrichtung (L) aufweist, wenn sie von dem distalen Endabschnitt (114b) zu dem ersten Faltenbalgsegment (116a) läuft, die zu dem distalen Endabschnitt (114b) gerichtet ist.

8. Bremszylinder (100, 200, 300) nach einem der vorstehenden Ansprüche, wobei
- der Faltenbalg (114) eine proximale Verbindungseinheit (122) umfasst, die an dem proximalen Endabschnitt (114a) zum Verbinden des Faltenbalgs (114) mit der Schubstange (112) angeordnet ist, und wobei, optional
- die Schubstange (112) eine zusammenwirkende Verbindungseinheit (124) umfasst, die in der Nähe des proximalen Endes (112a) angeordnet und konfiguriert ist, um eine Verbindung, vorzugsweise eine lösbare Verbindung, mit der proximalen Verbindungseinheit (122) des Faltenbalgs (114) auszubilden.

9. Bremszylinder (100, 200, 300) nach einem der vorstehenden Ansprüche, wobei der Faltenbalg (114) eine distale Verbindungseinheit (126) umfasst, die angeordnet und konfiguriert ist, um mit dem Gehäuse (102) an der oder in der Nähe der Schubstangenöffnung (104) verbunden zu werden.

10. Bremszylinder (100, 200, 300) nach einem der vorstehenden Ansprüche, wobei der distale Endabschnitt (114b) des Faltenbalgs (114) einen Schlitz (127) umfasst, der angeordnet und konfiguriert ist, um einen Rand (128) der Schubstangenöffnung (104) aufzunehmen.

11. Bremszylinder (300) nach einem der vorstehenden Ansprüche, wobei das Gehäuse (102) ferner eine Feststellbremskammer (301), umfassend einen federbelasteten Feststellbremskolben (312), aufnimmt, der konfiguriert ist, um das bewegbare Trennelement (110) bei Empfang eines Feststellbremssignals (S) zu betätigen.

12. Faltenbalg (114) zur Verwendung in einem Bremszylinder (100, 200, 300) nach einem der vorstehenden Ansprüche 1 bis 11, wobei der Faltenbalg (114) ein Faltenbalginnenvolumen (V3) zum Aufnehmen eines Mittelabschnitts (112c) einer Schubstange (112) definiert, wobei der Faltenbalg (114) einen proximalen Endabschnitt (114a), der mit der Schubstange (112) in einem Bereich in der Nähe eines proximalen Endes (112a) der Schubstange (112) verbindbar ist, und einen distalen Endabschnitt (114b), der mit einem Gehäuse (102) des Bremszylinders (100, 200, 300) an einer Schubstangenöffnung (104) verbindbar ist, aufweist;
wobei der Faltenbalg (114) mindestens ein faltbares Faltenbalgsegment (116, 116a, 116b, 116c) in einer Längsrichtung L aufweist,
**dadurch gekennzeichnet, dass** eine Querschnittsflächenmenge (A1) des Faltenbalginnenvolumens (V3) an dem distalen Endabschnitt (114b) des Faltenbalgs (114) größer als eine maximale Querschnittssegmentfläche (A2a) eines ersten Faltenbalgsegments (116a) in der Nähe des distalen Endabschnitts (114b) ist, derart, dass in einem gefalteten Zustand des Faltenbalgs (114) das erste Faltenbalgsegment (116a) mindestens teilweise innerhalb des distalen Endabschnitts (114b) eingepasst ist.

13. Faltenbalg (114) nach Anspruch 12, ferner umfassend einen Übergangsabschnitt (114c), der den distalen Endabschnitt (114b) des Faltenbalgs (114) mit dem ersten Faltenbalgsegment (116a) verbindet, und wobei der Übergangsabschnitt (114c) eine Längskomponente (LC) in der Längsrichtung (L) aufweist, die zu dem distalen Ende des Faltenbalgs gerichtet ist, wenn sie von dem distalen Endabschnitt des Faltenbalgs zu dem ersten Faltenbalgsegment läuft.

14. Verwendung eines Faltenbalgs (114) nach Anspruch 12 oder 13 in einem Bremszylinder, insbesondere in einem Bremszylinder eines Nutzfahrzeugs.

15. Bremssystem (400), insbesondere das Bremssystem eines Nutzfahrzeugs (500), umfassend
- eine Fluidzuführeinheit, insbesondere eine Druckluftzuführeinheit (402) zum Zuführen von Fluid (403) für das Bremssystem (400)
- einen Bremszylinder (100, 200, 300) nach einem der Ansprüche 1 bis 11, wobei der Einlassanschluss (1) mit der Fluidzuführeinheit (402) zum Empfangen von Fluid, das die erste Kammer (106) füllt und das bewegbare Trennelement (110) betätigt, verbunden ist;
eine Bremseinheit (412), die mit dem distalen Ende (112b) der Schubstange (112) des Bremszylinders (100, 200, 300) verbunden ist und konfiguriert ist, um, wenn die Schubstange (122) betätigt wird, eine Bremskraft auf ein bewegbares Element (414), insbesondere auf ein Rad (414), des Nutzfahrzeugs (500) auszuüben.

## Revendications

1. Actionneur de frein (100, 200, 300), comprenant un boîtier (102) ayant un orifice d'entrée (1) pour recevoir un fluide, en particulier de l'air comprimé (403, 405), et une ouverture de tige de poussée (104), le boîtier (102) étant agencé et conçu pour loger
- une première chambre (106) reliée à l'orifice d'entrée (1) ; et
- une seconde chambre (108) qui comporte l'ouverture de tige de poussée (104), et dans lequel
la première chambre (106) et la seconde chambre (108) sont séparées par un élément de séparation mobile (110) agencé au niveau du boîtier (102), de telle sorte qu'une quantité de volume (V1) de la première chambre (106) augmente et qu'une quantité de volume (V2) de la seconde chambre (108) diminue lorsque le fluide pénètre dans la première chambre (106) par l'intermédiaire de l'entrée (1) et actionne l'élément de séparation (110) ; l'actionneur de frein (100), comprenant en outre :
- une tige de poussée (112) ayant une extrémité proximale (112a) reliée à l'élément de séparation mobile (110), et une extrémité distale (112b) faisant saillie à l'extérieur du boîtier (102) par l'intermédiaire de l'ouverture de tige de poussée (104) ; et
- un soufflet (114) définissant un volume interne de soufflet (V3) pour loger une section médiane (112c) de la tige de poussée (112), le soufflet (114) ayant une section d'extrémité proximale (114a) reliée à la tige de poussée (112) au niveau d'une région proche de l'extrémité proximale (112a) de la tige de poussée (112), et une section d'extrémité distale (114b) reliée au boîtier (102) au niveau de l'ouverture de tige de poussée (104) ; le soufflet (114) ayant au moins un segment de soufflet pliable (116) dans une direction longitudinale (L) ;
**caractérisé en ce que**
une superficie de section transversale (A1) du volume interne de soufflet (V3) au niveau de la section d'extrémité distale (114b) du soufflet (114) est supérieure à une superficie de segment de section transversale maximale (A2) d'un premier segment de soufflet (116a) à proximité de la section d'extrémité distale (114b) de telle sorte que, dans un état plié du soufflet (114), le premier segment de soufflet (116a) est au moins partiellement ajusté à l'intérieur de la section d'extrémité distale (114b).

2. Actionneur de frein (100, 200, 300) selon la revendication 1, dans lequel la superficie de la section transversale (A1) du volume interne de soufflet (V3) au niveau de la section d'extrémité distale (114b) du soufflet (114) est supérieure à la superficie de segment de section transversale maximale (A2a, A2b, A2c) de tout segment de soufflet (116a, 116b, 116c) du ou des segments de soufflet (116).

3. Actionneur de frein (100, 300) selon l'une quelconque des revendications précédentes, dans lequel l'élément de séparation mobile (110) est un élément de séparation élastique (110), en particulier un diaphragme (110).

4. Actionneur de frein (100, 300) selon la revendication 3, dans lequel l'extrémité proximale (112a) de la tige de poussée (112) est reliée à un piston (118) qui est fixé à l'élément de séparation élastique (110).

5. Actionneur de frein (200) selon l'une quelconque des revendications 1 à 3, dans lequel l'élément de séparation mobile (210) est un élément de séparation rigide (210), en particulier un piston (210).

6. Actionneur de frein (200) selon la revendication 5, comprenant en outre un élément d'étanchéité (220) agencé et conçu pour sceller la première chambre (106) de la seconde chambre (108), en particulier lorsque le piston (210) est actionné.

7. Actionneur de frein (100, 200, 300) selon l'une quelconque des revendications précédentes, dans lequel le soufflet (114) comprend une section de transition (114c) reliant la section d'extrémité distale (114b) du soufflet (114) au premier segment de soufflet (116a), et dans lequel la section de transition (114c) présente une composante longitudinale (LC) dans la direction longitudinale (L) en passant de la section d'extrémité distale (114b) au premier segment de soufflet (116a) qui est dirigée vers la section d'extrémité distale (114b).

8. Actionneur de frein (100, 200, 300) selon l'une quelconque des revendications précédentes, dans lequel
- le soufflet (114) comprend une unité de liaison proximale (122) agencée au niveau de la section d'extrémité proximale (114a) pour relier le soufflet (114) à la tige de poussée (112), et dans lequel, éventuellement
- la tige de poussée (112) comprend une unité de liaison coopérante (124) agencée à proximité de l'extrémité proximale (112a) et conçue pour former une liaison, de préférence une liaison libérable, avec l'unité de liaison proximale (122) du soufflet (114).

9. Actionneur de frein (100, 200, 300) selon l'une quelconque des revendications précédentes, dans lequel le soufflet (114) comprend une unité de liaison distale (126) agencée et conçue pour être reliée au boîtier (102) au niveau ou à proximité de l'ouverture de tige de poussée (104).

10. Actionneur de frein (100, 200, 300) selon l'une quelconque des revendications précédentes, dans lequel la section d'extrémité distale (114b) du soufflet (114) comprend une fente (127) agencée et conçue pour loger un rebord (128) de l'ouverture de tige de poussée (104).

11. Actionneur de frein (300) selon l'une quelconque des revendications précédentes, dans lequel le boîtier (102) loge en outre une chambre de frein de stationnement (301) comprenant un piston de frein de stationnement à ressort (312) qui est conçu pour actionner l'élément de séparation mobile (110) à la réception d'un signal de frein de stationnement (S).

12. Soufflet (114), destiné à être utilisé dans un actionneur de frein (100, 200, 300) selon l'une quelconque des revendications précédentes 1 à 11, le soufflet (114) définissant un volume interne de soufflet (V3) pour loger une section médiane (112c) d'une tige de poussée (112), le soufflet (114) ayant une section d'extrémité proximale (114a) pouvant être reliée à la tige de poussée (112) au niveau d'une région proche d'une extrémité proximale (112a) de la tige de poussée (112), une section d'extrémité distale (114b) pouvant être reliée à un boîtier (102) de l'actionneur de frein (100, 200, 300) au niveau d'une ouverture de tige de poussée (104) ; le soufflet (114) ayant au moins un segment de soufflet pliable (116, 116a, 116b, 116c) dans une direction longitudinale L,
**caractérisé en ce qu'**une superficie de section transversale (A1) du volume interne de soufflet (V3) au niveau de la section d'extrémité distale (114b) du soufflet (114) est supérieure à une superficie de section transversale maximale (A2a) d'un premier segment de soufflet (116a) à proximité de la section d'extrémité distale (114b), de telle sorte que, dans un état plié du soufflet (114), le premier segment de soufflet (116a) est au moins partiellement ajusté à l'intérieur de la section d'extrémité distale (114b).

13. Soufflet (114) selon la revendication 12, comprenant en outre une section de transition (114c) reliant la section d'extrémité distale (114b) du soufflet (114) au premier segment de soufflet (116a), et dans lequel la section de transition (114c) a une composante longitudinale (LC) dans la direction longitudinale (L) qui est dirigée vers l'extrémité distale du soufflet en passant de la section d'extrémité distale du soufflet au premier segment de soufflet.

14. Utilisation d'un soufflet (114) selon la revendication 12 ou 13 dans un actionneur de frein, en particulier dans un actionneur de frein d'un véhicule utilitaire.

15. Système de freinage (400), en particulier système de freinage d'un véhicule utilitaire (500), comprenant
- une unité d'alimentation en fluide, en particulier une unité d'alimentation en air comprimé (402) pour fournir du fluide (403) pour le système de freinage (400)
- un actionneur de frein (100, 200, 300) selon l'une quelconque des revendications 1 à 11, dans lequel l'orifice d'entrée (1) est relié à l'unité d'alimentation en fluide (402) pour recevoir du fluide remplissant la première chambre (106) et actionner l'élément de séparation mobile (110) ;
une unité de freinage (412) reliée à l'extrémité distale (112b) de la tige de poussée (112) de l'actionneur de frein (100, 200, 300) et conçue pour appliquer, lorsque la tige de poussée (122) est actionnée, une force de freinage sur un élément mobile (414), en particulier sur une roue (414) du véhicule utilitaire (500).
